# EUROPÄISCHE PATENTSCHRIFT

(11) **EP 3 041 693 B1**
(45) Veröffentlichungstag und Bekanntmachung des Hinweises auf die Patenterteilung: **21.06.2017**
(21) Anmeldenummer: 14747684.0
(22) Anmeldetag: 06.08.2014
(51) Int. Cl.: B60G 21/05, B60G 21/055, B60B 35/02

(54) **VERBUNDLENKERACHSE MIT EIN- UND AUSBAUBAREM STABILISATOR**
TWIST-BEAM REAR AXLE HAVING A STABILISER THAT CAN BE INSTALLED AND REMOVED
ESSIEU DE TORSION MUNI D'UN STABILISATEUR DÉMONTABLE

(30) Priorität: 04.09.2013 DE 102013217639
(43) Veröffentlichungstag der Anmeldung: 13.07.2016
(73) Patentinhaber: ZF Friedrichshafen AG, 88046 Friedrichshafen (DE)
(72) Erfinder: KONTERMANN, Peter, 49090 Osnabrück (DE); HACKER, Clemens, 49080 Osnabrück (DE)
(86) Internationale Anmeldenummer: PCT/EP2014/066942
(87) Internationale Veröffentlichungsnummer: WO 2015/032575

(56) Entgegenhaltungen:
- EP-A1- 2 055 511
- EP-B1- 0 452 835
- WO-A1-00/53443
- DE-A1-102008 002 524
- FR-A1- 2 730 192
- FR-A1- 2 750 925
- FR-A1- 2 793 735
- JP-A- H1 029 415
- JP-A- H09 193 636
- JP-A- H09 193 640
- JP-A- 2012 111 440

## Beschreibung

Die vorliegende Erfindung betrifft eine Verbundlenkerachse gemäß der im Oberbegriff des Patentanspruchs 1 näher definierten Art.

Verbundlenkerachsen besitzen bereits durch ihre tordierbare Querstrebe eine Stabilisatorwirkung. Zur Erzielung einer optimalen Fahrwerksabstimmung ist es jedoch in vielen Fällen erforderlich, einen zusätzlichen Stabilisator in die Verbundlenkerachse einzubauen. Als Stabilisatoren werden im Allgemeinen quer zur Fahrzeuglängsrichtung liegende Drehstabfedern verwendet, die mit ihren Enden an den Längslenkern der Verbundlenkerachse angreifen. Stabförmige Stabilisatoren werden üblicherweise unmittelbar in die Blechwände der Längslenker eingeschweißt.

Aus der EP 0 452 835 B1 ist ferner eine Verbundlenkerachse für Kraftfahrzeug-Hinterachsen mit einem als zumindest annähernd geradlinigen Drehstab ausgebildeten Stabilisator bekannt, bei der die Anbindung der Stabilisatorenden an die Längslenker jeweils über ein Koppelglied erfolgt, das pleuelstangeartig ausgebildet ist. Das radseitige Ende dieses Koppelgliedes weist eine Ausnehmung zur formschlüssigen Verbindung mit dem dort seitlich einsteckenden Stabilisatorende auf. Der Stabilisator weist hierbei eine runde Querschnittsform auf, die es ermöglicht, den Stabilisator zum Ein- und Ausbauen in seiner ganzen Länge durch die radseitige Ausnehmung des Koppelgliedes hindurch zu schieben. Eine Demontage zumindest eines Rades bei Entlastung der Achse ist dabei erforderlich.

Die der Erfindung zu Grunde liegende Aufgabe wird durch die Merkmale des Patentanspruchs 1 gelöst. Weitere vorteilhafte Ausgestaltungen ergeben sich aus den Unteransprüchen und den Zeichnungen.

Es wird eine Verbundlenkerachse für ein Kraftfahrzeug mit zwei in Fahrzeugquerrichtung voneinander beabstandeten Längslenkern vorgeschlagen. Die Längslenker erstrecken sich im Wesentlichen in Fahrzeuglängsrichtung und sind insbesondere radtragend und -führend ausgebildet. Der Längslenker umfasst somit vorzugsweise radseitig einen mit diesem insbesondere anteilig ausgebildeten Radträger. Aufbauseitig sind die Längslenker schwenkbar am dafür vorgesehenen Fahrzeugaufbau anlenkbar ausgebildet. Die Längslenker können des Weiteren in einer Blechschalenbauweise hergestellt sein.

Zusätzlich umfasst die Verbundlenkerachse eine sich in Fahrzeugquerrichtung zwischen den beiden Längslenkern erstreckende und mit den beiden Längslenkern im Bereich ihrer beiden Enden starr verbundene Querstrebe. Die Querstrebe ist vorzugsweise als offenes Profil ausgebildet und weist im Schnitt eine V- oder U-Form oder auch eine Kombination von beiden auf. Die Querstrebe kann aus einem Rohr geformt sein, welches zu einem doppelwandigen Profil der vorgenannten V- oder U-Form umgeformt ist. Die Querstrebe weist ein tordierbares, biegesteifes Profil mit einer sich in ihrer Längsrichtung erstreckenden Querstrebenöffnung auf. Die Querstrebenöffnung kann sich hierbei über die gesamte Länge der Querstrebe erstrecken.

Auch weist die Verbundlenkerachse einen im Wesentlichen stabförmigen, geradlinigen und/oder sich entlang der Querstrebe erstreckenden Stabilisator auf. Der Stabilisator ist zumindest teilweise im Inneren des Profils der Querstrebe angeordnet, so dass sich die Bauteile überdecken. Zum Verbinden mit den Längslenkern greift der Stabilisator im Bereich seiner beiden Stabilisatorenden formschlüssig und lösbar in eine jeweilige Ausnehmung ein, die vorzugsweise in einem Verbindungsbereich mit dem jeweiligen Längslenker ausgebildet ist. Die Ausnehmung weist eine Öffnung auf, über die das Stabilisatorende zur Montage bzw. Demontage des Stabilisators ein- und ausführbar ist. Die Ausnehmung kann entweder unmittelbar am jeweiligen Längslenker ausgebildet sein oder aber auch mittelbar an einem zwischen dem Längslenker und dem Stabilisatorende dazwischengeschalteten Bauteil, insbesondere einem Koppelelement.

Die Öffnung zumindest einer der beiden Ausnehmungen erstreckt sich annähernd quer zur Längsrichtung des Längslenkers und annähernd quer zur Längsrichtung der Querstrebenöffnung, so dass der Stabilisator über die Querstrebenöffnung ein- und ausbaubar ist. Sie erstreckt sich auch in Längsrichtung des Stabilisators bzw. Endes des Stabilisators, so dass der Stabilisator sehr einfach und schnell über die Querstrebenöffnung in die Ausnehmung ein- und ausbaubar ist. Vorteilhafterweise kann somit sehr schnell und einfach die Wanksteifigkeit der Verbundlenkerachse durch den Einbau eines entsprechenden Stabilisators eingestellt werden. Der Wechsel des Stabilisators in Richtung der Querstrebenöffnung ermöglicht einen Ein- und Ausbau, ohne das die Achse oder ein oder beide Räder demontiert werden müssen. Der Stabilisator kann sogar ein- oder ausgebaut werden, wenn das Fahrzeug z.B. in einer Werkstatt auf einer Fahrzeuggrube auf der Achse steht und durch das Fahrzeuggewicht belastet ist. Ein aufwändiger und kostenintensiver Wechsel der gesamten Verbundlenkerachse zur Anpassung der Wanksteifigkeit kann somit vermieden werden. Des Weiteren können aufgrund der lösbaren, formschlüssigen Aufnahme des Stabilisators in der Ausnehmung auch Stabilisatormaterialien verwendet werden, die nicht verschweißbar sind. Hierfür bieten sich insbesondere Faserverbundwerkstoffe an, mittels derer eine Gewichtsreduktion der Verbundlenkerachse erzielt werden kann.

Bei dem aus dem Stand der Technik bekannten seitlichen Einschieben des Stabilisators in die Ausnehmung über seine gesamte Länge hinweg wird zu dessen Montage bzw. Demontage seitlich des Fahrzeugs sehr viel Freiraum benötigt. Des Weiteren ist bei bereits montierten Reifen eine Montage bzw. Demontage des Stabilisators nicht mehr möglich. Die Montage bzw. Demontage des Stabilisators erweist sich demnach als sehr umständlich. Zur Vermeidung dieser Nachteile ist es vorteilhaft, wenn der Stabilisator derart ausgebildet ist, dass er über die Querstrebenöffnung auf einer schräg, insbesondere im Wesentlichen quer, vorzugsweise orthogonal, zur Längsachse der Querstrebe verlaufenden Montagerichtung ein- und ausbaubar ist. Vorteilhafterweise kann somit der Stabilisator - je nach Orientierung der Querstrebenöffnung - z. B. von der Unterseite oder Oberseite oder auch in oder entgegen der Fahrtrichtung des Fahrwerks sehr schnell und einfach montiert bzw. demontiert werden.

Vorteilhaft ist es, wenn sich die Öffnung der Ausnehmung in Längsrichtung des Stabilisators im Wesentlichen vom Bereich des Stabilisatorendes ausgehend, insbesondere von diesem in Richtung des jeweiligen Längslenkers beabstandet, in Richtung der Fahrzeugmitte erstreckt. Auch kann das Stabilisatorende von dem Längslenker beabstandet sein. Vorteilhafterweise muss der Stabilisator somit zur Montage nicht zwangsläufig eingeschwenkt werden, sondern kann annähernd gerade auf der zur Längsachse der Querstrebe orthogonal verlaufenden Montagerichtung eingelegt werden.

Vorteilhaft ist es, wenn die Öffnung der Ausnehmung gegenüber der Längsachse des Stabilisators geneigt ist. Hierdurch wird ein entlang der Montagerichtung bzw. Montageachse geradliniges Einlegen oder einseitiges Einkippen des Stabilisatorendes ermöglicht. Beim Einkippen wird der Stabilisator zunächst mit einem seiner beiden Stabilisatorenden in eine der beiden Ausnehmungen eingeführt und in die mit der erfindungsgemäßen Öffnung ausgebildete zweite Ausnehmung in Richtung der Querstrebenöffnung eingeschwenkt.

In einer vorteilhaften Weiterbildung der Erfindung weist der Stabilisator einen ersten und einen zweiten Bereich auf, die zueinander winklig, insbesondere rechtwinklig, ausgerichtet sind. Vorteilhafterweise kann somit das Stabilisatorende sehr einfach ausgebildet sein. Der Großteil des Stabilisators ist z.B. stabförmig ausgeführt. Am Ende des Stabes, der den ersten Bereich darstellt, ist der zweite Bereich form-, kraft oder stoffschlüssig festgelegt. So kann der an den ersten Bereich angrenzende zweite Bereich zum Bespiel durch Schweißen oder Verpressen mittels einer Polygonverbindung, verbunden sein. Bei der Polygonverbindung weisen die Innenkontur des zweiten Bereichs und die Außenkontur des ersten Bereichs jeweils eine polygonale Querschnittsform mit abgerundeten Ecken auf. Auf diese Weise lassen sich zwischen dem zweiten Bereich und dem Stabilisator hohe Drehmomente übertragen, während gleichzeitig die Kerbwirkung an den Ecken der polygonalen Querschnittsform von beiden Bereichen reduziert wird.

Der Verbindungsbereich zwischen dem Längslenker und dem Stabilisator kann günstig ausgebildet werden, wenn sich der erste Bereich im Wesentlichen in Längsrichtung des Stabilisators und/oder der zweite Bereich im Wesentlichen in Querrichtung des Stabilisators, insbesondere quer zum jeweiligen Längslenker und/oder der Querstrebe, erstreckt. Wenn die Ausnehmung rechteckig ausgestaltet ist, so ist die Außenkontur des zweiten Bereichs ebenfalls mit einer einfachen rechteckigen Außenform zur versehen, die mit der Ausnehmung korrespondiert und kostengünstig herstellbar ist. Der Stabilisator kann mit diesen rechteckigen Bereichen einfach in die Ausnehmungen eingeführt werden, woraus sich eine schnelle und kostengünstige Montage ergibt.

Zur Gewichtsreduktion der Verbundlenkerachse ist es vorteilhaft, wenn die Längslenker durch eine Blechschalenbauweise ausgebildet sind. Um in diesem Fall die nötige Festigkeit sicherstellen zu können, ist es vorteilhaft, wenn die Ausnehmung in einem Koppelelement ausgebildet ist, das vorzugsweise mit der Querstrebe im Bereich seines jeweiligen Endes form- und/oder stoffschlüssig verbunden ist. Hierbei ist das Koppelelement vorzugsweise im jeweiligen Endbereich der Querstrebe mit dieser und/oder dem Längslenker verbunden, insbesondere verschweißt.

Um eine sehr schnelle und einfache Montage sowie Demontage des Stabilisators in der Ausnehmung sicherstellen zu können, ist es vorteilhaft, wenn das Koppelelement eine, insbesondere in Richtung der Fahrzeugmitte geöffnete Form, insbesondere U-Form aufweist. Ferner kann das Koppelelement hierdurch sehr steif ausgebildet werden.

Zur Übertragung von Drehmomenten von einem der beiden Längslenker über den Stabilisator auf den anderen der beiden Längslenker ist es vorteilhaft, wenn das Stabilisatorende in der Ausnehmung mittels Formschluss drehfest mit diesem gekoppelt ist. Dieses wird mit den vorgenannten Verbindungen erreicht.

Um ein Herausrutschen des in der Ausnehmung eingeschobenen Stabilisatorendes vermeiden zu können, ist es vorteilhaft, wenn das Stabilisatorende mittels eines Sicherungselementes in der Ausnehmung fixiert ist.

Eine schnelle und einfache Montage kann sichergestellt werden, wenn sich das Sicherungselement, insbesondere eine Schraube oder ein Bolzen, von Seiten der Querstrebenöffnung und/oder von einer der Querstrebenöffnung gegenüberliegenden Seite des Koppelementes her zumindest teilweise durch das Stabilisatorende und/oder Koppelelement erstreckt. Hierdurch kann vorteilhafterweise ferner ein Herausrutschen des Stabilisators aus der Querstrebenöffnung vermieden werden.

Um eine Festigkeitsminderung des Stabilisatorendes durch entsprechende Bohrungen zu vermeiden, ist es vorteilhaft, wenn das Sicherungselement als Bügel ausgebildet ist, der sich quer zur Querstrebe über die Öffnung erstreckt und/oder mit dem Koppelelement verschraubt ist.

Zur Gewichtsreduktion aber auch zur Beeinflussung der Wanksteifigkeit der Verbundlenkerachse ist es vorteilhaft, wenn der Stabilisator einen, insbesondere aus Kunststoff, vorzugsweise aus Faserverbundwerkstoff oder Kohlefaser ausgebildeten, stabförmigen Grundkörper aufweist, an dessen Enden jeweils ein die Stabilisatorenden ausbildendes Verbindungselement form-, kraft- und/oder stoffschlüssig verbunden ist und somit verdrehfest mit der Querstrebe verbunden ist. Vorteilhafterweise können somit die Materialeigenschaften des Grundkörpers insbesondere mit Blick auf Festigkeit zur Aufnahme von Torsionsmomenten und Leichtbau gezielt variiert werden, ohne den Stabilisator und/oder das Koppelelement in ihrem Befestigungsbereich zu schwächen.

Zur Festlegung des Stabilisators in Fahrzeugquerrichtung ist es vorteilhaft, wenn die Ausnehmung eine Anschlagfläche aufweist, mittels derer ein Verschieben des Stabilisators in Fahrzeugquerrichtung vermieden wird.

Nachfolgend ist die Erfindung anhand von Zeichnungen näher erläutert. Es zeigen:
Figur 1 eine Draufsicht auf eine Verbundlenkerachse,
Figur 2 eine perspektivische Detailansicht des Befestigungsbereiches zwischen Stabilisator und Koppelelement der Verbundlenkerachse,
Figur 3 eine Schnittansicht des Befestigungsbereiches der Verbundlenkerachse,
Figur 4a - 4c eine Schnittansicht des Befestigungsbereiches mit drei unterschiedliche Varianten eines Sicherungselementes und
Figur 5 eine alternative Ausführungsform des Stabilisators.

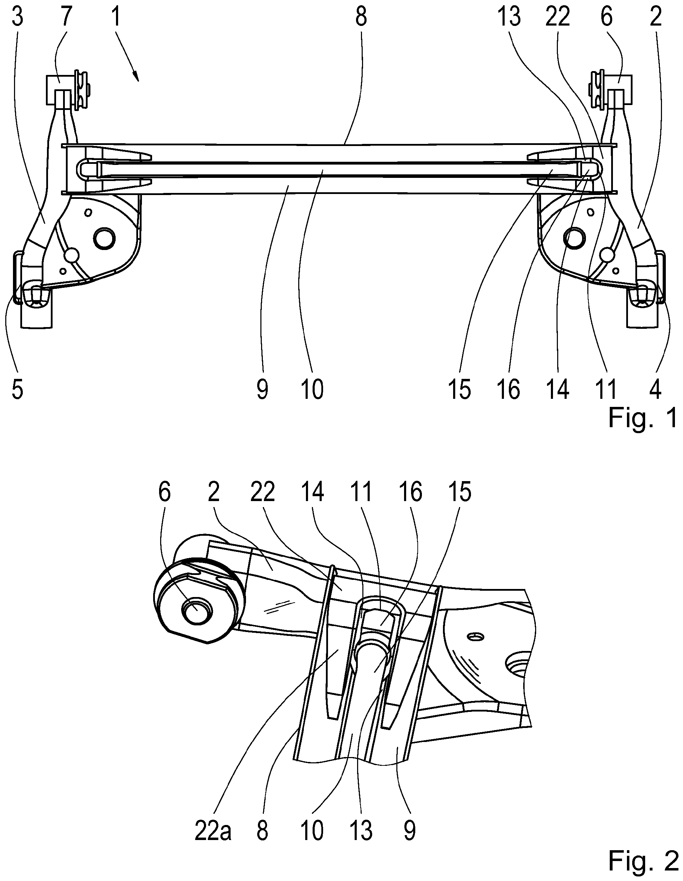

Figur 1 zeigt eine Draufsicht auf eine Verbundlenkerachse 1, insbesondere eine Hinterachse eines Kraftfahrzeugs. Die Verbundlenkerachse 1 weist einen ersten Längslenker 2 und einen zweiten Längslenker 3 auf. Die beiden Längslenker 2, 3 sind voneinander in Fahrzeugquerrichtung beabstandet. Jeder dieser Längslenker 2, 3 weist radseitig einen Radträger 4, 5 auf, der ein dafür vorgesehenes Rad drehbar gelagert aufnehmen kann. Die Radträger 4, 5 sind vorliegend starr mit dem jeweiligen Längslenker 2, 3 verbunden. Vorzugsweise sind die Längslenker 2, 3 mit ihrem jeweiligen Radträger 4, 5 einteilig ausgebildet. Die Längslenker 2, 3 sind aufbauseitig mittels eines Gelenks 6, 7 schwenkbar am dafür vorgesehenen Aufbau des Fahrzeugs anlenkbar. Infolgedessen schwenkt der Längslenker 2, 3 beim Ein- und Ausfedern des Rades mit seinem radseitigen Ende um das aufbauseitige Gelenk 6, 7.

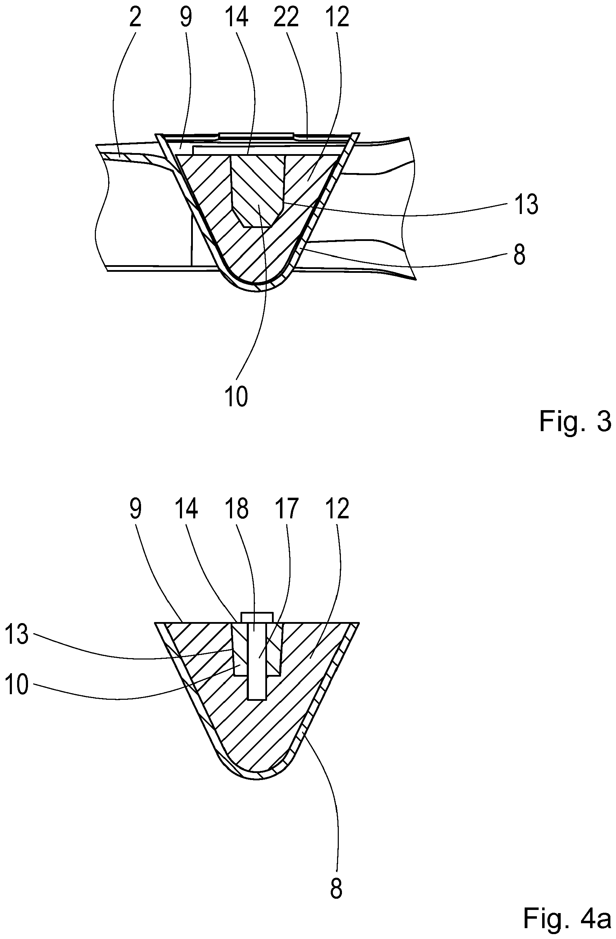

Zwischen den beiden Längslenkern 2, 3 erstreckt sich in Fahrzeugquerrichtung eine Querstrebe 8. Die Querstrebe 8 ist im Bereich ihrer beiden Enden mit dem jeweils zugeordneten Längslenker 2, 3 starr verbunden. Hierfür ist die Querstrebe 8 vorzugsweise mit dem jeweiligen Längslenker 2, 3 verschweißt. Die Querstrebe 8 weist ein um ihre Längsachse tordierbares, jedoch biegesteifes Profil auf. Im vorliegenden Ausführungsbeispiel weist das Profil der Querstrebe 8 eine V-Form auf (vgl. Figur 3). Die Querstrebe 8 bzw. dessen Profil weist eine Querstrebenöffnung 9 auf. Die Querstrebenöffnung 9 erstreckt sich in Längsrichtung der Querstrebe 8. Die Querstrebenöffnung 9 ist vorzugsweise im Wesentlichen in Fahrzeughochrichtung zeigend ausgerichtet.

Des Weiteren umfasst die Verbundlenkerachse 1 einen Stabilisator 10. Der Stabilisator 10 ist parallel zur Querstrebe 8 angeordnet. Er erstreckt sich somit in vergleichbarer Art und Weise wie die Querstrebe 8 in Fahrzeugquerrichtung zwischen den beiden Längslenkern 2, 3. Der Stabilisator 10 ist im Wesentlichen stabförmig und/oder geradlinig ausgebildet. Der Stabilisator 10 ist im Bereich seiner Stabilisatorenden 11 derart mit dem jeweils zugeordneten Längslenker 2, 3 gekoppelt, dass ein beim Einfedern eines der beiden Längslenker erzeugtes Drehmoment über eine Torsion des Stabilisators 10 an den anderen Längslenker 2, 3 übertragen werden kann.

Zur Wahrung der Übersichtlichkeit ist in Figur 1 lediglich einer der beiden Verbindungsbereiche des Stabilisators 10 mit Bezugszeichen versehen. Demnach weist die Verbundlenkerachse 1 im Verbindungsbereich zwischen Stabilisator 10 und Längslenker 2 ein Koppelelement 12 auf. Das Koppelelement 12 ist im jeweiligen Endbereich der Querstrebe 8 und/oder im Inneren des Profils angeordnet. Ferner ist das Koppelelement 12 form- und/oder stoffschlüssig mit der Querstrebe 8 verbunden. Das Koppelelement 12 weist eine mit der Innenfläche der Querstrebe 8 formschlüssig korrespondierende Außenkontur auf. Hierdurch ist vorteilhafterweise die exakte Position des Koppelelementes 12 in der Querstrebe 8 bei der Montage festgelegt. Nach dem Einlegen des Koppelelementes 12 in das Innere des offenen Profils der Querstrebe 8 wird das Koppelelement 12 mit der Querstrebe 8 verschweißt.

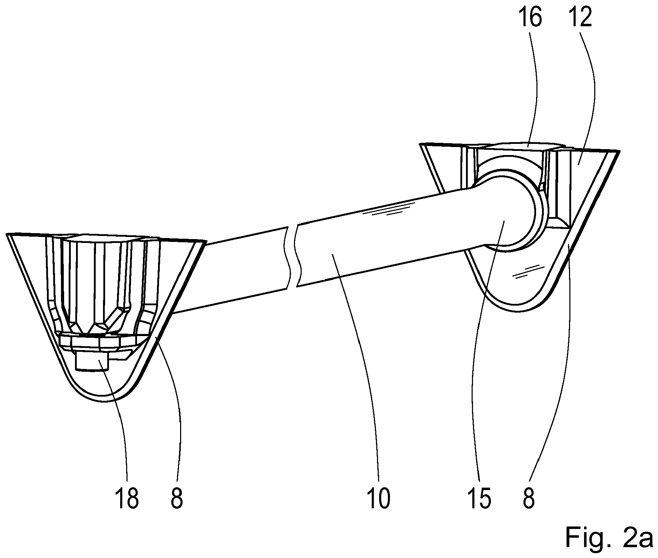

Das Koppelelement 12 weist eine Ausnehmung 13 auf. In diese Ausnehmung 13 greift der im Inneren des Profils der Querstrebe 8 angeordnete Stabilisator 10 im Bereich seines jeweiligen Stabilisatorendes 11 formschlüssig und lösbar ein. Zur Montage bzw. Demontage des Stabilisators 10 weisen die Ausnehmung 13, wie in Figur 2 und 3 ersichtlich, eine Öffnung 14 auf. Die Öffnung 14 erstreckt sich hierbei zumindest teilweise in Längsrichtung des Stabilisators 10 und/oder der Querstrebe 8. Hierdurch wird es ermöglicht, dass der Stabilisator 10 über die Querstrebenöffnung 9 in die Ausnehmungen 13 eingelegt bzw. zur Demontage aus dieser wieder entnommen werden kann. Gemäß der in Figur 1 bis 3 dargestellten Ausführungsform der Öffnung 14 ist diese derart in Richtung der Querstrebenöffnung 9 ausgerichtet bzw. orientiert, dass der Stabilisator 10 über die Querstrebenöffnung 9 auf einer im Wesentlichen orthogonal zur Längsachse der Querstrebe 8 verlaufenden Montagerichtung ein- und ausbaubar ist.

Gemäß Figur 2 erstreckt sich die Öffnung 14 in Längsrichtung des Stabilisators 10 im Wesentlichen ausgehend vom Bereich des Stabilisatorendes 11 in Richtung der Fahrzeugmitte. Das Stabilisatorende 11 weist gemäß Figur 2 einen ersten Bereich 15 und einen zweiten Bereich 16 auf, die zueinander winklig ausgerichtet sind. In Figur 2a ist deutlich zu erkennen, das die Bereich 15, 16 rechtwinklig zueinander ausgerichtet und verbunden sind. Die zweite Bereich 16 des Stabilisators 10 greift formschlüssig in das Koppelelement 12 ein, wobei die Bauteile zueinander in korrespondierender rechteckiger Form ausgebildet sind. Die Querstrebe 8 ist in dieser Darstellung lediglich angedeutet.

Figur 2 zeigt des Weiteren ein Schließblech 22, das zur Verstärkung der Querstrebe8 an dessen äußeren Enden oberhalb des Koppelelements 12 mit der Querstrebe 8 verschweißt ist. Hierbei weist ein erster Bereich 22 gegenüber der Querstrebenöffnung 9 eine geringere Neigung auf als ein zweiter Bereich 22a. Der zweite Bereich 22a schließt mit dem Stabilisator einen spitzen Winkel ein. Das Schließlich 22 ist an seiner Außenkontur an der Innenseite der Querstrebe 8 verschweißt. Das Schließblech 22 weist eine ausreichend große Öffnung auf, die von ihrer Innenkontur so ausgebildet ist, dass der Stabilisator 10 ohne Widerstand eingelegt werden kann. Die Innenkontur des Schließblechs 22 ist größer ausgebildet als die Innenkontur des Koppelelements 10.

Figur 3 zeigt einen Querschnitt durch den Befestigungsbereich des Stabilisators 10 mit dem Koppelelement 12. Aus dieser geht hervor, dass die Öffnung 14 in Richtung der Querstrebenöffnung 9 bzw. zu dieser hin orientiert ist, so dass das Stabilisatorende 11 über die Querstrebenöffnung 9 und die Öffnung 14 in die Ausnehmung 13 eingelegt werden kann. Zur drehfesten Verbindung des Stabilisators 10 mit dem Koppelelement 12 weist das Stabilisatorende 11 eine von einem rotationssymmetrischen Körper abweichende Kontur auf, die bündig an der Innenfläche der Ausnehmung 13 anliegt.

Die Figuren 4a bis 4c zeigen den Befestigungsbereich im Querschnitt mit unterschiedlichen Varianten eines Sicherungselementes 17. Gemäß Figur 4a kann das Sicherungselement 17 von der Querstrebenöffnungsseite her angebracht sein. Hierdurch kann eine sehr einfache Montage über die Querstrebenöffnung 9 sichergestellt werden. Im vorliegenden Ausführungsbeispiel ist das Sicherungselement 17 als Schraube ausgebildet, die sich von der Querstrebenöffnungsseite her durch das Stabilisatorende 11 hindurch bis in das Koppelelement 12 erstreckt.

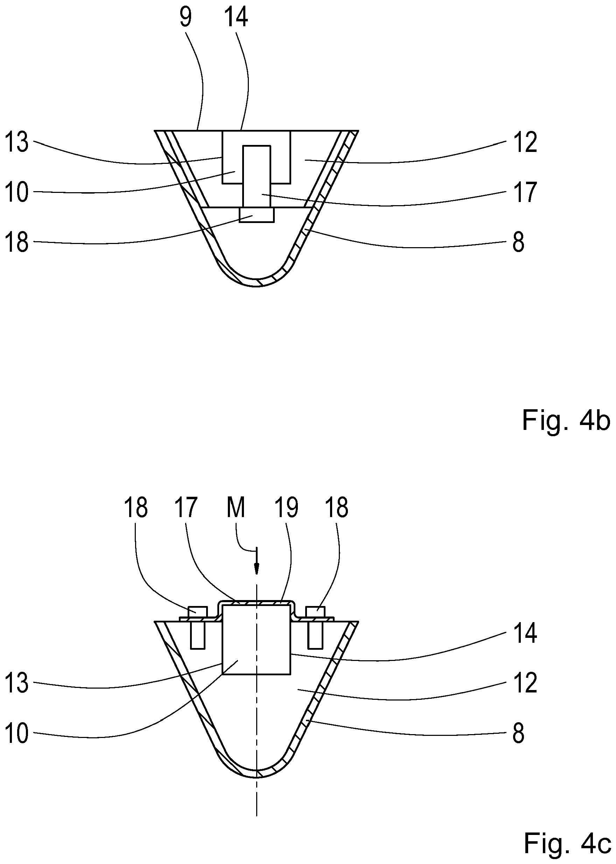

Alternativ kann das Stabilisatorende 11 aber auch gemäß dem in Figur 4b dargestellten Ausführungsbeispiel mit dem Koppelelement 12 von einer der Querstrebenöffnung 9 abgewandten Seite des Koppelelementes 12 in das Koppelelement 12 und das Stabilisatorende 11 eingeschraubt sein. Gemäß Figur 4b erstreckt sich hierbei das Sicherungselement 17 bzw. die Schraube 18 durch das Koppelelement 12 hindurch bis in die Ausnehmung 13, wo es mit dem Stabilisatorende 11 verschraubt ist.

Um eine Schwächung des Stabilisators 10 im Bereich der Stabilisatorenden 11 zu vermeiden, kann das Sicherungselement 17 gemäß Figur 4c aber auch als Bügel 19 ausgebildet sein. Dieser erstreckt sich quer zur Querstrebe 8 und ist an dem Koppelelement 12 und/oder am Schließblech 22 befestigt, insbesondere mit diesem verschraubt.

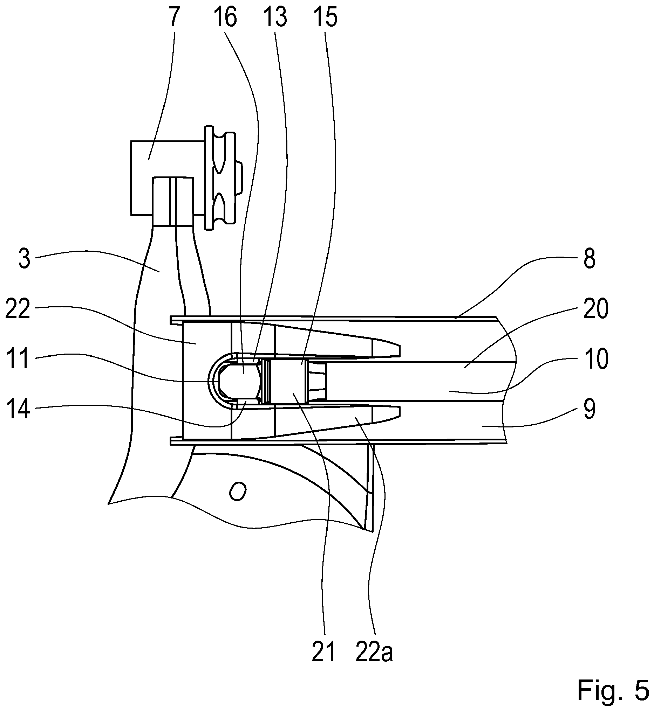

Figur 5 zeigt eine alternative Ausführungsform des Stabilisators 10. Hierbei umfasst der Stabilisator 10 einen Grundkörper 20 und ein am jeweiligen Stabilisatorende 11 angeordnetes Verbindungselement 21. Bei dieser Ausführungsform besteht der Grundkörper 12 aus einem leichten Faserverbundwerkstoff. Die jeweils am Stabilisatorende 11 angeordneten Verbindungselemente 21 sind hierbei form- und stoffschlüssig mit dem Grundkörper 20 verbunden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichen

- 1.: Verbundlenkerachse
- 2.: erster Längslenker
- 3.: zweiter Längslenker
- 4.: erster Radträger
- 5.: zweiter Radträger
- 6.: erstes Gelenk
- 7.: zweites Gelenk
- 8.: Querstrebe
- 9.: Querstrebenöffnung
- 10.: Stabilisator
- 11.: Stabilisatorende
- 12.: Koppelelement
- 13.: Ausnehmung
- 14.: Öffnung
- 15.: erster Bereich
- 16.: zweiter Bereich
- 17.: Sicherungselement
- 18.: Schraube
- 19.: Bügel
- 20.: Grundkörper
- 21.: Verbindungselement
- 22.: Schließblech; erster Bereich
- 22a.: Schließblech; zweiter Bereich
- M: Montagerichtung

## Patentansprüche

1. Verbundlenkerachse (1) für ein Kraftfahrzeug mit zwei in Fahrzeugquerrichtung voneinander beabstandeten Längslenkern (2; 3), mit einer sich in Fahrzeugquerrichtung zwischen den Längslenkern erstreckenden und mit diesen im Bereich ihrer beiden Enden starr verbundenen Querstrebe (8), die ein tordierbares, biegesteifes Profil mit einer sich in ihrer Längsrichtung erstreckenden Querstrebenöffnung (9) aufweist, und mit einem sich entlang der Querstrebe (8) erstreckenden Stabilisator (10), der zumindest teilweise im Inneren des Profils der Querstrebe (8) angeordnet ist und zum Verbinden mit den Längslenkern (2; 3) im Bereich seiner beiden Stabilisatorenden (11) formschlüssig und lösbar in eine jeweilige Ausnehmung (13) eingreift, die eine Öffnung (14) aufweist, über die das Stabilisatorende (11) ein- und ausführbar ist,
**dadurch gekennzeichnet, dass** sich die Öffnung (14) zumindest einer der beiden Ausnehmungen (13) annähernd quer zur Längsrichtung des Längslenkers und annähernd quer zur Längsrichtung der Querstrebenöffnung (8) erstreckt, so dass der Stabilisator (10) über die Querstrebenöffnung (9) ein- und ausbaubar ist.

2. Verbundlenkerachse nach dem vorherigen Anspruch, **dadurch gekennzeichnet, dass** der Stabilisator (10) über die Querstrebenöffnung (9) auf einer schräg, insbesondere im Wesentlichen quer, vorzugsweise orthogonal, zur Längsachse der Querstrebe (8) verlaufenden Montagerichtung ein- und ausbaubar ist.

3. Verbundlenkerachse nach einem oder mehreren der vorherigen Ansprüche, **dadurch gekennzeichnet, dass** sich die Öffnung (14) in Längsrichtung des Stabilisators (10) im Wesentlichen vom Bereich des Stabilisatorendes (11) ausgehend, insbesondere von diesem in Richtung des jeweiligen Längslenkers (2; 3) beabstandet, in Richtung der Fahrzeugmitte erstreckt.

4. Verbundlenkerachse nach einem oder mehreren der vorherigen Ansprüche, **dadurch gekennzeichnet, dass** die Öffnung (14) gegenüber der Längsachse des Stabilisators (10) geneigt ist.

5. Verbundlenkerachse nach einem oder mehreren der vorherigen Ansprüche, **dadurch gekennzeichnet, dass** der Stabilisator (10) einen ersten Bereich (15) und einen zweiten Bereich (16) aufweist, die zueinander winklig, insbesondere rechtwinklig, ausgerichtet sind, insbesondere der erste Bereich (15) sich im Wesentlichen in Längsrichtung des Stabilisators (10) und/oder der zweite Bereich (16) im Wesentlichen in Querrichtung des Stabilisators (10), insbesondere quer zum jeweiligen Längslenker (2; 3) und/oder der Querstrebe (8), erstreckt.

6. Verbundlenkerachse nach einem oder mehreren der vorherigen Ansprüche, **dadurch gekennzeichnet, dass** die Innenkontur des zweiten Bereichs (16) und die Außenkontur des ersten Bereichs (15) jeweils eine polygonale Querschnittsform mit abgerundeten Ecken aufweist.

7. Verbundlenkerachse nach einem oder mehreren der vorherigen Ansprüche, **dadurch gekennzeichnet, dass** die Ausnehmung (13) in einem Koppelelement (12) ausgebildet ist, das vorzugsweise mit der Querstrebe (8) im Bereich des jeweiligen Endes der Querstrebe form- und/oder stoffschlüssig verbunden ist.

8. Verbundlenkerachse nach einem oder mehreren der vorherigen Ansprüche, **dadurch gekennzeichnet, dass** das Koppelelement (12) eine Öffnung in Richtung der Querstrebenöffnung hin aufweist.

9. Verbundlenkerachse nach einem oder mehreren der vorherigen Ansprüche, **dadurch gekennzeichnet, dass** das Stabilisatorende (11) in der Ausnehmung (13) mittels Formschluss drehfest gekoppelt ist.

10. Verbundlenkerachse nach einem oder mehreren der vorherigen Ansprüche, **dadurch gekennzeichnet, dass** das Stabilisatorende (11) mittels eines Sicherungselementes (17) in der Ausnehmung (13) fixiert ist.

11. Verbundlenkerachse nach einem oder mehreren der vorherigen Ansprüche, **dadurch gekennzeichnet, dass** sich das Sicherungselement (17), insbesondere eine Schraube (18) oder ein Bolzen, von Seiten der Querstrebenöffnung (9) und/oder von einer der Querstrebenöffnung (9) gegenüberliegenden Seite des Koppelementes (12) her zumindest teilweise durch das Stabilisatorende (11) und das Koppelelement (12) erstreckt.

12. Verbundlenkerachse nach einem oder mehreren der vorherigen Ansprüche, **dadurch gekennzeichnet, dass** das Sicherungselement (17) als Bügel (19) ausgebildet ist, der sich quer zur Querstrebe (8) über die Öffnung (14) erstreckt und/oder mit dem Koppelelement (12) verschraubt ist.

13. Verbundlenkerachse nach einem oder mehreren der vorherigen Ansprüche, **dadurch gekennzeichnet, dass** der Stabilisator (10) aus einem verstärkten Kunststoff, insbesondere Faserverbundwerkstoff ausgebildet ist.

14. Verbundlenkerachse nach Anspruch 13, , **dadurch gekennzeichnet, dass** der Stabilisator (10) an dessen Enden jeweils ein die Stabilisatorenden (11) ausbildendes Verbindungselement (21) aufweist, welches mit dem Stabilisatorende form-, kraft- und/oder stoffschlüssig verbunden ist und drehfest mit der Ausnehmung (13) zusammenwirkt.

15. Verbundlenkerachse nach einem oder mehreren der vorherigen Ansprüche, **dadurch gekennzeichnet, dass** die Ausnehmung (9) eine Anschlagfläche aufweist, mittels derer ein Verschieben des Stabilisators (10) in Fahrzeugquerrichtung vermieden wird.

## Claims

1. Torsion beam axle (1) for a motor vehicle having two trailing arms (2; 3) which are spaced apart from one another in the vehicle transverse direction, having a transverse strut (8) which extends between the trailing arms in the vehicle transverse direction, is connected rigidly to the said trailing arms in the region of their two ends, and has a twistable, flexurally stiff profile with a transverse strut opening (9) which extends in its longitudinal direction, and having an anti-roll bar (10) which extends along the transverse strut (8), is arranged at least partially in the interior of the profile of the transverse strut (8), and, for connecting to the trailing arms (2; 3), engages in the region of its two anti-roll bar ends (11) in a positively locking and releasable manner into a respective recess (13) which has an opening (14), via which the anti-roll bar end (11) can be guided in and out, **characterized in that** the opening (14) of at least one of the two recesses (13) extends approximately transversely with respect to the longitudinal direction of the trailing arm and approximately transversely with respect to the longitudinal direction of the transverse strut opening (8), with the result that the anti-roll bar (10) can be installed and dismantled via the transverse strut opening (9).

2. Torsion beam axle according to the preceding claim, **characterized in that** the anti-roll bar (10) can be installed and dismantled via the transverse strut opening (9) in an assembly direction which runs obliquely, in particular substantially transversely, preferably orthogonally, with respect to the longitudinal axis of the transverse strut (8).

3. Torsion beam axle according to one or more of the preceding claims, **characterized in that** the opening (14) extends in the direction of the vehicle centre in the longitudinal direction of the anti-roll bar (10), starting substantially from the region of the anti-roll bar end (11), in particular in a manner which is spaced apart from the said anti-roll bar end (11) in the direction of the respective trailing arm (2; 3).

4. Torsion beam axle according to one or more of the preceding claims, **characterized in that** the opening (14) is inclined with respect to the longitudinal axis of the anti-roll bar (10).

5. Torsion beam axle according to one or more of the preceding claims, **characterized in that** the anti-roll bar (10) has a first region (15) and a second region (16) which are oriented at an angle with respect to one another, in particular at a right angle, and, in particular, the first region (15) extends substantially in the longitudinal direction of the anti-roll bar (10) and/or the second region (16) extends substantially in the transverse direction of the anti-roll bar (10), in particular transversely with respect to the respective trailing arm (2; 3) and/or the transverse strut (8).

6. Torsion beam axle according to one or more of the preceding claims, **characterized in that** the inner contour of the second region (16) and the outer contour of the first region (15) in each case have a polygonal cross-sectional shape with rounded corners.

7. Torsion beam axle according to one or more of the preceding claims, **characterized in that** the recess (13) is configured in a coupling element (12) which is preferably connected to the transverse strut (8) in the region of the respective end of the transverse strut in a positively locking and/or integrally joined manner.

8. Torsion beam axle according to one or more of the preceding claims, **characterized in that** the coupling element (12) has an opening in the direction of the transverse strut opening.

9. Torsion beam axle according to one or more of the preceding claims, **characterized in that** the anti-roll bar end (11) is coupled in the recess (13) in a torque-proof manner by means of a positively locking connection.

10. Torsion beam axle according to one or more of the preceding claims, **characterized in that** the anti-roll bar end (11) is fixed in the recess (13) by means of a securing element (17).

11. Torsion beam axle according to one or more of the preceding claims, **characterized in that** the securing element (17), in particular a bolt (18) or a pin, extends at least partially through the anti-roll bar end (11) and the coupling element (12) from sides of the transverse strut opening (9) and/or from a side of the coupling element (12), which side lies opposite the transverse strut opening (9).

12. Torsion beam axle according to one or more of the preceding claims, **characterized in that** the securing element (17) is configured as a bracket (19) which extends transversely with respect to the transverse strut (8) via the opening (14) and/or is screwed to the coupling element (12).

13. Torsion beam axle according to one or more of the preceding claims, **characterized in that** the anti-roll bar (10) is configured from a reinforced plastic, in particular fibre composite material.

14. Torsion beam axle according to Claim 13, **characterized in that**, at its ends, the anti-roll bar (10) has in each case one connecting element (21) which configures the anti-roll bar ends (11), is connected to the anti-roll bar end in a positively locking, non-positive and/or integrally joined manner, and interacts with the recess (13) in a torque-proof manner.

15. Torsion beam axle according to one or more of the preceding claims, **characterized in that** the recess (9) has a stop face, by means of which a displacement of the anti-roll bar (10) in the vehicle transverse direction is avoided.

## Revendications

1. Essieu de torsion arrière (1) pour un véhicule automobile, comprenant deux bras oscillants longitudinaux (2 ; 3) espacés l'un de l'autre dans la direction transversale du véhicule, avec une traverse (8) s'étendant dans la direction transversale du véhicule entre les bras oscillants longitudinaux et reliée rigidement à ceux-ci dans la région de leurs deux extrémités, qui présente un profil pouvant être tordu, rigide en flexion, avec une ouverture de traverse (9) s'étendant dans la direction longitudinale, et avec un stabilisateur (10) s'étendant le long de la traverse (8), qui est disposé au moins en partie à l'intérieur du profil de la traverse (8) et qui vient en prise par engagement par correspondance de formes de manière amovible dans un évidement respectif (13) en vue de sa connexion aux bras oscillants longitudinaux (2 ; 3) dans la région de ses deux extrémités de stabilisateur (11), l'évidement présentant une ouverture (14) par le biais de laquelle l'extrémité de stabilisateur (11) peut être introduite et ressortie,
**caractérisé en ce que** l'ouverture (14) d'au moins l'un des deux évidements (13) s'étend approximativement transversalement à la direction longitudinale du bras oscillant longitudinal et approximativement transversalement à la direction longitudinale de l'ouverture de traverse (8) de telle sorte que le stabilisateur (10) puisse être installé et démonté par le biais de l'ouverture de traverse (9).

2. Essieu de torsion arrière selon la revendication précédente, **caractérisé en ce que** le stabilisateur (10) peut être installé et démonté par le biais de l'ouverture de traverse (9) dans une direction de montage s'étendant obliquement, en particulier essentiellement transversalement, de préférence perpendiculairement à l'axe longitudinal de la traverse (8).

3. Essieu de torsion arrière selon l'une quelconque ou plusieurs des revendications précédentes, **caractérisé en ce que** l'ouverture (14) s'étend dans la direction longitudinale du stabilisateur (10) essentiellement depuis la région de l'extrémité de stabilisateur (11), en particulier à distance de celle-ci dans la direction du bras oscillant longitudinal respectif (2 ; 3), dans la direction du centre du véhicule.

4. Essieu de torsion arrière selon l'une quelconque ou plusieurs des revendications précédentes, **caractérisé en ce que** l'ouverture (14) est inclinée par rapport à l'axe longitudinal du stabilisateur (10).

5. Essieu de torsion arrière selon l'une quelconque ou plusieurs des revendications précédentes, **caractérisé en ce que** le stabilisateur (10) présente une première région (15) et une deuxième région (16) qui sont orientées l'une par rapport à l'autre suivant un certain angle, en particulier à angle droit, en particulier, la première région (15) s'étend essentiellement dans la direction longitudinale du stabilisateur (10) et/ou la deuxième région (16) s'étend essentiellement dans la direction transversale du stabilisateur (10), en particulier transversalement au bras oscillant longitudinal respectif (2 ; 3) et/ou à la traverse (8).

6. Essieu de torsion arrière selon l'une quelconque ou plusieurs des revendications précédentes, **caractérisé en ce que** le contour intérieur de la deuxième région (16) et le contour extérieur de la première région (15) présentent à chaque fois une forme en section transversale polygonale avec des coins arrondis.

7. Essieu de torsion arrière selon l'une quelconque ou plusieurs des revendications précédentes, **caractérisé en ce que** l'évidement (13) est réalisé dans un élément d'accouplement (12) qui est connecté par engagement par correspondance de formes et/ou par liaison de matière de préférence à la traverse (8) dans la région de l'extrémité respective de la traverse.

8. Essieu de torsion arrière selon l'une quelconque ou plusieurs des revendications précédentes, **caractérisé en ce que** l'élément d'accouplement (12) présente une ouverture dans la direction de l'ouverture de traverse.

9. Essieu de torsion arrière selon l'une quelconque ou plusieurs des revendications précédentes, **caractérisé en ce que** l'extrémité de stabilisateur (11) est accouplée de manière solidaire en rotation par engagement par correspondance de formes dans l'évidement (13).

10. Essieu de torsion arrière selon l'une quelconque ou plusieurs des revendications précédentes, **caractérisé en ce que** l'extrémité de stabilisateur (11) est fixée au moyen d'un élément de fixation (17) dans l'évidement (13).

11. Essieu de torsion arrière selon l'une quelconque ou plusieurs des revendications précédentes, **caractérisé en ce que** l'élément de fixation (17), en particulier une vis (18) ou un boulon, s'étend depuis des côtés de l'ouverture de traverse (9) et/ou depuis un côté de l'élément d'accouplement (12) opposé à l'ouverture de traverse (9) au moins en partie à travers l'extrémité de stabilisateur (11) et l'élément d'accouplement (12).

12. Essieu de torsion arrière selon l'une quelconque ou plusieurs des revendications précédentes, **caractérisé en ce que** l'élément de fixation (17) est réalisé sous forme d'étrier (19) qui s'étend transversalement à la traverse (8) à travers l'ouverture (14) et/ou qui est vissé à l'élément d'accouplement (12).

13. Essieu de torsion arrière selon l'une quelconque ou plusieurs des revendications précédentes, **caractérisé en ce que** le stabilisateur (10) est réalisé à partir d'un plastique renforcé, en particulier d'un matériau composite renforcé par des fibres.

14. Essieu de torsion arrière selon la revendication 13, **caractérisé en ce que** le stabilisateur (10) présente, au niveau de ses extrémités, à chaque fois un élément de connexion (21) constituant les extrémités de stabilisateur (11), qui est connecté par engagement par correspondance de formes, par force et/ou par liaison de matière à l'extrémité de stabilisateur et qui coopère de manière solidaire en rotation avec l'évidement (13).

15. Essieu de torsion arrière selon l'une quelconque ou plusieurs des revendications précédentes, **caractérisé en ce que** l'évidement (9) présente une surface de butée au moyen de laquelle un déplacement du stabilisateur (10) dans la direction transversale du véhicule est évité.
